(19) Europäisches Patentamt
European Patent Office
Office européen des brevets

(11) **EP 4 691 609 A1**

(12) **EUROPEAN PATENT APPLICATION**
published in accordance with Art. 153(4) EPC

(43) Date of publication:
**11.02.2026 Bulletin 2026/07**

(51) International Patent Classification (IPC):
**B01D 61/00** (2006.01)    **B01D 69/08** (2006.01)
**B01D 69/12** (2006.01)    **B01D 71/56** (2006.01)

(21) Application number: **24780317.4**

(52) Cooperative Patent Classification (CPC):
**B01D 61/00; B01D 69/08; B01D 69/12; B01D 71/56**

(22) Date of filing: **26.03.2024**

(86) International application number:
**PCT/JP2024/011963**

(87) International publication number:
**WO 2024/204207 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.03.2023 JP 2023052291**

(71) Applicant: **Asahi Kasei Kabushiki Kaisha
Tokyo 100-0006 (JP)**

(72) Inventors:
• **OSAKI, Takahiro
Tokyo 100-0006 (JP)**
• **TAKADA, Ryoichi
Tokyo 100-0006 (JP)**
• **KATAYAMA, Yuji
Tokyo 100-0006 (JP)**

(74) Representative: **D Young & Co LLP
3 Noble Street
London EC2V 7BQ (GB)**

(54) **RAW MATERIAL LIQUID FLOW CONCENTRATION SYSTEM AND RAW MATERIAL LIQUID FLOW CONCENTRATION METHOD**

(57) Provided is a raw material flow concentration system that causes an induced liquid flow and a raw material liquid flow that includes an organic solvent as a solvent to flow in a counter flow or parallel flow through a forward osmosis membrane, and causes the organic solvent included in the raw material liquid flow to pass through the forward osmosis membrane to move to the induced liquid flow, and thereby obtains a concentrated raw material liquid flow that is a concentrated raw material liquid flow and a diluted induced liquid flow that is a diluted induced liquid flow, said raw material flow concentration system wherein the water content of the forward osmosis membrane is 300 g/m$^2$ or less.

Fig. 2

**Description**

FIELD

The present invention relates to a feed solution flow concentration system and feed solution flow concentration method, for use in removal of an organic solvent from a feed solution flow, where the flow of the feed solution comprises an organic solvent as a solvent, for concentration of the feed solution.

BACKGROUND

Concentration of feed solutions comprising organic solvents as solvents is commonly carried out in industry for a variety of purposes. In pharmaceutical production processes, for example, an organic solvent is removed from a feed solution containing a pharmaceutical or its intermediate in order to concentrate it, while the waste liquid containing the organic solvent is concentrated to reduce the volume of waste liquid to be disposed of, and the organic solvent that has been recovered in the concentration step is then reutilized.

Methods known for concentrating feed solutions containing organic solvents include vacuum distillation methods, reverse osmosis (RO) methods, osmotically assisted reverse osmosis (OARO) methods and forward osmosis (FO) methods.

In a vacuum distillation method, the feed solution is heated at about 60 to 150°C to increase the vapor pressure of the solvent, and then the gas phase is reduced in pressure to promote removal of the solvent by transpiration (PTL 1).

A reverse osmosis method is a method using a membrane that allows the solvent to permeate on the molecular level. In a reverse osmosis method, the pressure of the feed solution is raised to a predetermined high pressure, and the feed solution is then supplied to the reverse osmosis membrane and caused to permeate in order to remove the solvent, thereby concentrating the feed solution (PTL 2).

Osmotically assisted reverse osmosis is a technique that eliminates the concentration limit in reverse osmosis methods. In an osmotically assisted reverse osmosis method, a hyperosmotic solution and a pressurized feed solution are contacted through a reverse osmosis membrane to concentrate the feed solution (PTL 3). In this case, migration of the solvent which is driven by pressurization of the feed solution, and migration of the solvent which is driven by the difference in osmotic pressure between the feed solution and the hyperosmotic solution, cause the solvent in the feed solution to migrate very efficiently into the hyperosmotic solution, thus concentrating the feed solution.

Forward osmosis is a technique in which the difference in osmotic pressure is used as the driving force for separation and concentration of the solvent from the feed solution. In a forward osmosis method, a feed solution and a draw solution having higher osmotic pressure than the feed solution are contacted through a forward osmosis membrane to cause diffusion of the solvent from the feed solution into the draw solution, thereby concentrating the feed solution (PTL 4). Since a forward osmosis method does not require heating or pressurization, it is expected that the desired concentration effect can be maintained for prolonged periods even with a feed solution containing a large amount of a high molecular weight polymer.

[CITATION LIST]

[PATENT LITERATURE]

[PTL 1] Japanese Unexamined Patent Publication HEI No. 08-027077
[PTL 2] Japanese Unexamined Patent Publication HEI No. 11-75759
[PTL 3] Japanese Patent Public Inspection No. 2019-504763
[PTL 4] International Patent Publication No. WO2022/004738

SUMMARY

[TECHNICAL PROBLEM]

Techniques known in the prior art for concentrating feed solutions have both advantages and disadvantages.

For example, vacuum distillation methods allow the feed solution to be concentrated to a high concentration level without requiring special pretreatment of the feed solution. However, since heating of the feed solution is necessary in vacuum distillation methods, this can result in problems such as alteration of the quality of the active components in the feed solution. A large amount of energy consumption is also required for heating of the feed solution.

In reverse osmosis, the energy required for driving of the high-pressure pump is sufficient for the energy consumption, but as mentioned above, there is a limit to the level of concentration that can be achieved depending on the capacity of the pump. In reverse osmosis methods it is also necessary to apply pressurization to the feed solution, and therefore clogging of the membrane tends to occur. In order to prevent membrane clogging it is therefore necessary to carry out pretreatment to remove components other than the target solute, such as solids and unwanted organic materials, from the feed solution.

In osmotically assisted reverse osmosis, energy consumption is sufficient if it is enough to drive a high-pressure pump, allowing concentration of the feed solution to a high concentration level. However, as in reverse osmosis, pretreatment is necessary to prevent membrane clogging.

In forward osmosis, energy consumption is sufficient if it can drive a liquid feed pump, and the feed solution can be concentrated to a high concentration level without requiring special pretreatment and without requiring heating. The technology of PTL 4, however, still has low organic solvent flux and insufficient concentration efficiency.

The present invention has been completed in light of the circumstances described above.

It is an object of the invention to provide a system and method for low energy consumption and efficient concentration of a feed solution containing an organic solvent.

[SOLUTION TO PROBLEM]

The present invention that accomplishes the object described above may be summarized as follows.

<Aspect 1>

A feed solution flow concentration system wherein:

a feed solution flow comprising an organic solvent as a solvent, and a draw solution flow, are caused to flow in countercurrent flow or cocurrent flow through a forward osmosis membrane, and
the organic solvent in the feed solution flow is caused to pass through the forward osmosis membrane and migrate into the draw solution flow, thereby obtaining:

a concentrated feed solution flow as the feed solution flow that has been concentrated, and a diluted draw solution flow as the draw solution flow that has been diluted,
wherein the water content of the forward osmosis membrane is 300 g/m$^2$ or lower.

<Aspect 2>

The feed solution flow concentration system according to aspect 1, wherein the H term of the Hansen solubility parameters ($\delta_H$) for the organic solvent in the feed solution flow is 2.5 MPa$^{0.5}$ to 12.5 MPa$^{0.5}$

<Aspect 3>

The feed solution flow concentration system according to aspect 2, wherein the H term of the Hansen solubility parameters ($\delta_H$) for the organic solvent in the feed solution flow is 3.0 MPa$^{0.5}$ to 10.0 MPa$^{0.5}$

<Aspect 4>

The feed solution flow concentration system according to any one of aspects 1 to 3, wherein the organic solvent includes one or more selected from the group consisting of tetrahydrofuran, 2-methyltetrahydrofuran, diethyl ether, cyclopentyl methyl ether, t-butyl methyl ether, methyl acetate, ethyl acetate, propyl acetate, isopropyl acetate, butyl acetate, isobutyl acetate, toluene, acetone, acetonitrile, N,N-dimethylformamide, N,N-dimethylacetamide, N-methyl-2-pyrrolidone, dimethyl sulfoxide and 1,3-dimethyl-2-imidazolidinone.

<Aspect 5>

The feed solution flow concentration system according to any one of aspects 1 to 4, wherein 50 mass% or more of the total solvent in the feed solution flow is an organic solvent.

<Aspect 6>

The feed solution flow concentration system according to any one of aspects 1 to 5, wherein the feed solution flow comprises a solute.

<Aspect 7>

The feed solution flow concentration system according to any one of aspects 1 to 6, wherein the draw solution flow comprises an organic solvent.

<Aspect 8>

The feed solution flow concentration system according to any one of aspects 1 to 7, wherein the draw solution flow comprises a polymer.

<Aspect 9>

The feed solution flow concentration system according to aspect 8, wherein the polymer is one or more selected from the group consisting of polyethylene glycol and polypropylene glycol.

<Aspect 10>

The feed solution flow concentration system according to any one of aspects 1 to 9, wherein:

the forward osmosis membrane is a composite semipermeable membrane comprising a support layer and a separation active layer formed on the support layer, and
the separation active layer comprises a polyamide.

<Aspect 11>

The feed solution flow concentration system according to any one of aspects 1 to 10, wherein the forward osmosis membrane is in the form of hollow fibers.

<Aspect 12>

A feed solution flow concentration method carried out using a feed solution flow concentration system according to any one of aspects 1 to 11, the method comprising a feed solution flow concentration step,

wherein a feed solution flow comprising an organic solvent as the solvent, and a draw solution flow, are caused to flow in countercurrent flow or cocurrent flow through a forward osmosis membrane, and
the organic solvent in the feed solution flow is caused to pass through the forward osmosis membrane and migrate into the draw solution flow, thereby obtaining:
a concentrated feed solution flow as the feed solution flow that has been concentrated, and a diluted draw solution flow as the draw solution flow that has been diluted.

<Aspect 13>

The feed solution flow concentration method according to aspect 12, which comprises, before the feed solution flow concentration step, a forward osmosis membrane water content-lowering step, in which the water content of the forward osmosis membrane is lowered.

<Aspect 14>

The feed solution flow concentration method according to aspect 13, wherein the forward osmosis membrane water content-lowering step is a step in which the water in the forward osmosis membrane is replaced with the organic solvent in the feed solution flow.

[ADVANTAGEOUS EFFECTS OF INVENTION]

The invention provides a system and method for low energy consumption and efficient concentration of a feed solution comprising an organic solvent.

BRIEF DESCRIPTION OF DRAWINGS

Fig. 1 is a simplified cross-sectional view illustrating an example of the structure of a forward osmosis membrane module used in a feed solution flow concentration system of the invention.
Fig. 2 is a conceptual drawing illustrating an example of the construction of the feed solution flow concentration system of the invention.

DESCRIPTION OF EMBODIMENTS

The feed solution flow concentration system of the invention is a feed solution flow concentration system wherein:

a feed solution flow comprising an organic solvent as a solvent, and a draw solution flow, are caused to flow in countercurrent flow or cocurrent flow through a forward osmosis membrane, and
the organic solvent in the feed solution flow is caused to pass through the forward osmosis membrane and migrate into the draw solution flow, thereby obtaining:

a concentrated feed solution flow as the feed solution flow that has been concentrated, and a diluted draw solution flow as the draw solution flow that has been diluted,
wherein the water content of the forward osmosis membrane is 300 g/m$^2$ or lower.

The present inventors have investigated in detail factors that affect the flux of organic solvents during concentration of organic solvent-containing feed solutions by forward osmosis. As a result, it has been found that the flux of an organic solvent is in a relationship with the water content of the forward osmosis membrane used in the forward osmosis method.
In other words, it was found that a lower water content of the forward osmosis membrane increases the flux of the organic solvent.
While the reason for this is not completely understood, the present researchers conjecture as follows.
Since a forward osmosis membrane is usually composed of a hydrophilic material, hydrophobic solvents having low compatibility with water are less able to permeate the forward osmosis membrane. Even if an organic solvent is generally considered to be a hydrophilic organic solvent, it will have a hydrophobic group which is likely to restrict affinity with the hydrophilic forward osmosis membrane.
It is therefore possible that a low water content of the forward osmosis membrane increases the affinity between the forward osmosis membrane and organic solvent and thus increases the flux of the organic solvent.
This phenomenon has not been known in the prior art. The phenomenon is particularly surprising for hydrophilic organic solvents such as tetrahydrofuran which are used in the Examples described below.
However, the present invention is not to be constrained by this interpretation.
Each of the elements composing the feed solution flow concentration system of the invention will now be described in order.

<Feed solution flow>

The feed solution flow according to the invention is the flow of the feed solution, which includes an organic solvent as the solvent, and it may also include a solute.

<Solvent>

The feed solution composing the feed solution flow of the invention comprises an organic solvent as the solvent.
The organic solvent in the solvent of the feed solution may be a hydrophilic organic solvent.
In quantitative terms, the organic solvent in the feed solution preferably has a Hansen solubility parameter H-term ($\delta_H$) value of 2.5 MPa$^{0.5}$ to 12.5 MPa$^{0.5}$
The Hansen parameters are the proposed solubility parameter SP values isolated as $\delta_D$, $\delta_P$ and $\delta_H$.

The term $\delta_D$ is known as the "dispersion term", and it is a term based on the van der Waals attraction.

The term $\delta_P$ is known as a "polarization term", and it is a term based on dipole moment and permittivity.

The term "$\delta_H$" is known as the "hydrogen bonding term", and it includes intermolecular forces based on hydrogen bonding, being forces that cannot be classified as either $\delta_D$ or $\delta_P$ (for example, force based on $\pi$-$\pi$ interaction).

For the purpose of the invention, the term of interest is $\delta_H$.

The Hansen solubility parameters can be calculated using the Hansen SP & QSPR model add-on for the commercially available software application Winmostar 9.4.11.

If the $\delta_H$ value of the organic solvent is 2.5 MPa$^{0.5}$ or greater, affinity with the hydrophilic forward osmosis membrane will be sufficiently high, helping to ensure high flux. If $\delta_H$ is 12.5 MPa$^{0.5}$ or lower, on the other hand, the organic solvent will have a certain degree of hydrophobicity to more easily provide an effect of lowering the water content of the forward osmosis membrane.

From the same viewpoint, the $\delta_H$ value of the organic solvent is preferably 2.5 MPa$^{0.5}$ or greater, and it may be 3.0 MPa$^{0.5}$ or greater, 5.0 MPa$^{0.5}$ or greater, 7.0 MPa$^{0.5}$ or greater or 8.0 MPa$^{0.5}$ or greater. Likewise, the $\delta_H$ value of the organic solvent is preferably 12.5 MPa$^{0.5}$ or lower, and it may be 12.0 MPa$^{0.5}$ or lower, 10.0 MPa$^{0.5}$ or lower, 9.0 MPa$^{0.5}$ or lower, 8.0 MPa$^{0.5}$ or lower or 7.0 MPa$^{0.5}$ or lower.

When the solvent in the feed solution is a mixed organic solvent comprising two or more different organic solvents, the $\delta_H$ value of the mixed organic solvent can be calculated from the $\delta_H$ value and volume fraction for each organic solvent.

For example, in a mixed organic solvent comprising n types of organic solvents, where $\delta_H$ of the ith organic solvent is represented as $\delta_{Hi}$ and the volume fraction as vi, the $\delta_H$ of the mixed organic solvent can be calculated by the following formula (1).

[Mathematical Formula 1]

$$\delta_H = \sum_{i=1}^{n} (\delta_{Hi} \times v_i) \qquad (1)$$

As explained below, the solvent in the feed solution may comprise water, but the water is not considered when calculating $\delta_H$. That is, when the solvent in the feed solution contains water, the $\delta_H$ and volume fraction of the water are not reflected in formula (1), and calculation assumes a total volume fraction $v_i$ of the organic solvent of "1".

According to the invention, the organic solvent in the feed solution may include one or more selected from the group consisting of tetrahydrofuran, 2-methyltetrahydrofuran, diethyl ether, cyclopentyl methyl ether, t-butyl methyl ether, methyl acetate, ethyl acetate, propyl acetate, isopropyl acetate, butyl acetate, isobutyl acetate, toluene, acetone, acetonitrile, N,N-dimethylformamide, N,N-dimethylacetamide, N-methyl-2-pyrrolidone, dimethyl sulfoxide and 1,3-dimethyl-2-imidazolidinone, for example.

The organic solvent in the feed solution may comprise or not comprise another organic solvent other than those mentioned above.

Examples of other organic solvents include methanol, ethanol, 1-propanol, 2-propanol, 1-butanol, 2-butanol, 2-methyl-1-propanol, 3-methyl-1-butanol, 1-pentanol, ethylene glycol, 2-methoxyethanol, 2-ethoxyethanol, 1,2-dimethoxyethane, 1,1-dimethoxymethane, 2,2-dimethoxypropane, 1,1-diethoxypropane, 1,4-dioxane, anisole, diisopropyl ether, petroleum ether, methyl ethyl ketone, methyl isopropyl ketone, methyl butyl ketone, methyl isobutyl ketone, formic acid, acetic acid, trichloroacetic acid, trifluoroacetic acid, ethyl formate, formamide, benzene, ethylbenzene, o-xylene, m-xylene, p-xylene, cumene, tetralin, pentane, hexane, cyclohexane, heptane, methylcyclohexane, isooctane, chlorobenzene, dichloromethane, 1,2-dichloroethane, 1,1-dichloroethene, 1,2-dichloroethene, chloroform, 1,1,1-trichloroethane, 1,1,2-trichloroethene, carbon tetrachloride, nitromethane, pyridine and sulfolane, any one or more of which may be used as necessary.

The organic solvent in the feed solution may comprise the organic solvent at 60 mass% or greater, 70 mass% or greater, 80 mass% or greater, 90 mass% or greater or 95 mass% or greater with respect to the total mass of the organic solvent, or the total amount of organic solvent in the feed solution may be the aforementioned organic solvent.

The solvent of the feed solution may also comprise water.

With the feed solution flow concentration system of the invention, it is possible to effectively concentrate the feed solution (removal of the organic solvent from the feed solution), even if the solvent in the feed solution contains water.

However, from the viewpoint of further increasing the effect of improving the concentration efficiency of the feed solution by lowering the water content of the forward osmosis membrane, preferably 50 mass% or greater of the total solvent in the feed solution is an organic solvent. From the viewpoint of maximizing the effect of reducing the water content of the forward osmosis membrane, the proportion of organic solvent constituting the entire solvent in the feed solution may be 60 mass% or greater, 70 mass% or greater, 80 mass% or greater, 90 mass% or greater, 95 mass% or greater or 99 mass% or greater, or the entire solvent in the feed solution may be an organic solvent.

<Solute>

The feed solution of the invention may also comprise a solute.

The feed solution flow concentration system of the invention has the advantage of allowing the feed solution to be concentrated to a high concentration level, without heating the feed solution and without requiring special pretreatment of the feed solution. The feed solution flow concentration system of the invention is therefore preferably applied for concentration of a feed solution containing a solute that is readily altered under stress such as heating or pretreatment.

From this viewpoint, the solute in the feed solution of the feed solution flow concentration system of the invention is preferably one or more selected from among pharmaceuticals, active pharmaceutical ingredients, development pipelines (medical and pharmaceutical candidate compounds), intermediate bodies and starting materials.

An active pharmaceutical ingredient is a substance (active ingredient) having pharmacological action in the stage of a final product (pharmaceutical or formulation), and it serves as a starting material for production of the pharmaceutical.

A development pipeline (medical or pharmaceutical candidate compound) is a candidate pharmaceutical compound from the stage of research and development, through clinical trials (tests) until being marketed as a drug, and it is often referred to as a "new drug candidate". Such a drug is marketed as a drug after having been explored as a novel compound and approved following different clinical trial phases (phase I, phase II and phase III). A development pipeline referred to herein may be a compound at any development stage prior to its approval as a drug.

Active pharmaceutical ingredients and development pipelines include low molecular pharmaceuticals; medium molecular pharmaceuticals such as nucleic acid drugs and peptide drugs; polymer pharmaceuticals such as antibody drugs and protein drugs; and low molecular pharmaceuticals bonded to antibodies, such as antibody-drug conjugates (ADC), as well as their derivatives.

Active pharmaceutical ingredients and development pipelines are produced by chemical synthesis, fermentation or extraction, or a combination of such processes.

An intermediate is produced in an intermediate step during manufacture of an active pharmaceutical ingredient or development pipeline, and it can be converted to an active pharmaceutical ingredient or development pipeline by subsequent manufacturing steps. The intermediate may be an active pharmaceutical ingredient starting substance incorporated as a key constituent of the structure of the active pharmaceutical ingredient, a key intermediate body having at least one essential feature (a specific stereochemical structure or pharmacological activity) introduced into the molecular structure, or a final intermediate by which an active pharmaceutical ingredient is produced by one further reaction.

A starting material is a substance used for manufacture of an active pharmaceutical ingredient or development pipeline, and it may be a chemical species not found in the active pharmaceutical ingredient or development pipeline, or a mixture containing the chemical species. Examples of starting materials include, but are not limited to, one or more from among starting substances for production of active pharmaceutical ingredients, starting substances for production of development pipelines, catalysts, unrefined active pharmaceutical ingredients and unrefined development pipelines.

Examples of solutes include amino acids, peptides, proteins, sugars, vaccines, nucleic acids, antibiotics, vitamins, natural substances, synthetic starting materials or intermediates known as "building blocks", and derivatives of the foregoing.

Amino acids include essential amino acids, non-essential amino acids and non-natural amino acids. Examples of essential amino acids include tryptophan, lysine, methionine, phenylalanine, threonine, valine, leucine and isoleucine. Examples of non-essential amino acids include arginine, glycine, alanine, serine, tyrosine, cysteine, asparagine, glutamine, proline, aspartic acid and glutamic acid.

A non-natural amino acid is any artificial compound having an amino acid backbone in the same molecule and not found in nature, and it can be synthesized by bonding various labeling compounds to an amino acid backbone. The term "amino acid backbone" includes the carboxyl and amino groups in the amino acids, and the portions connecting them. The term "labeling compound" refers to a pigment compound, a fluorescent substance, a chemical/bioluminescent substance, an enzyme substrate, a coenzyme, an antigenic substance or a protein-binding substance that is known to those skilled in the art.

An example of a non-natural amino acid is a "labeled amino acid" which is an amino acid bonded to a labeling compound. Examples of labeled amino acids include amino acids having a labeling compound bonded to an amino acid which comprises an amino acid backbone including an aromatic ring such as a benzene ring on a side chain. Examples of non-natural amino acids with specific functions include photoresponsive amino acids, photo-switchable amino acids, fluorogenic probe amino acids and fluorescent-labeled amino acids.

Peptides are compounds having at least 2 and less than 70 amino acid residues bonded together, either in a linear or cyclic fashion, and optionally with a branched structure. Examples of peptides to be concentrated include L-alanyl-L-glutamine, β-alanyl-L-histidine cyclosporin and glutathione.

Proteins are generally amino acid residue-bonded compounds having longer chain lengths than peptides. Proteins are preferably those applied in protein preparations. Examples of protein preparations include interferon-α, interferon-β, interleukin-1 to 12, growth hormones, erythropoietin, insulin, granulocyte colony-stimulating factor (G-CSF), tissue plasminogen activator (TPA), sodium diuretic peptide, blood clotting factor VIII, somatomedin, glucagon, growth hormone releasing factor, serum albumin and calcitonin.

Examples of sugars include monosaccharides (for example, glucose, fructose, galactose, mannose, ribose and deoxyribose), disaccharides (for example, maltose, sucrose and lactose), saccharide derivatives (for example, glucose, galactose, mannose, fucose, xylose, glucuronic acid and iduronic acid; N-acetylglucosamine, N-acetylgalactosamine, N-acetylneuraminic acid and glucose 5-acetic acid), and sugar chains having a structure with a monosaccharide bonded by glycoside bonding (such as agarose and cyclodextrin).

Examples of vaccines include hepatitis A vaccine, hepatitis B vaccine, hepatitis C vaccine and COVID-19 vaccine,

examples of nucleic acids include oligonucleotides, RNA, aptamers and decoys, and
examples of antibiotics include streptomycin and vancomycin.

Examples of vitamins include the vitamin A group, vitamin B group and vitamin C group, including their derivatives and salts. The vitamin B group includes vitamin B6 and vitamin B12, for example.

The number-average molecular weight of a solute in the feed solution may be about 100 to 50,000, preferably about 100 to 30,000, more preferably about 100 to 10,000, and especially preferably 100 to 6,000.

If the molecular weight of the solute is too low, it may permeate through the forward osmosis membrane, while if the molecular weight is too high the solute may adhere onto the membrane surface, which is also undesirable.

The number-average molecular weight of the solute can be determined by calculation of the solute from the chemical formula, for a relatively low molecular weight (for example, a molecular weight of 2,000 or lower). When the molecular weight of the solute is relatively high (such as a molecular weight of greater than 2,000), the number-average molecular weight can be determined as the number-average molecular weight in terms of polyethylene glycol, as measured by gel permeation chromatography (GPC).

The molecular weight can be measured by matrix-assisted laser desorption ionization timeof-flight mass spectrometry (MALDI ToF-MS), for a solute without an appropriate reference sample and whose molecular weight cannot be accurately measured by GPC.

The feed solution flow may also be the flow of an analysis solution that is analyzed for quality control of the active pharmaceutical ingredient or formulation, and for impurity management. Such an analysis solution may be a cleaning agent or rinse liquid used for washing of equipment after drug manufacturing; or an extract obtained by extracting impurities from an active pharmaceutical ingredient or formulation. The solute to be analyzed in such an analysis solution may be a compound with mutagenicity or a compound with recognized carcinogenesis risk, and specifically it may be a nitrosoamine.

<Draw solution flow>

The draw solution flow in the feed solution flow concentration system of the invention is the flow of the draw solution.

The draw solution composing the draw solution flow may include one or more selected from among organic solvents and polymers. The draw solution may also comprise a salt.

The following may be mentioned as examples for the composition of the draw solution.

A drawn solution:

composed entirely of an organic solvent,
composed of a polymer alone,
composed of both an organic solvent and a polymer,
composed of an organic solvent and a salt,
composed of a polymer and a salt, or
composed of an organic solvent, a polymer and a salt.

<Organic solvent>

The organic solvent in the draw solution may be a hydrophilic organic solvent, selected as appropriate from among those mentioned above for the organic solvent in the feed solution.

The organic solvent in the draw solution is preferably an organic solvent of the same type as the organic solvent in the feed solution, from the viewpoint of efficient concentration of the feed solution.

<Polymer>

If the draw solution contains a polymer, the osmotic pressure of the draw solution will be higher. This will help promote migration of the organic solvent in the feed solution flow into the draw solution flow through the forward osmosis membrane.

The polymer in the draw solution is preferably soluble in the organic solvent in the feed solution. The polymer may therefore be a hydrophilic polymer.

Examples of polymers in the draw solution include one or more selected from among polyethylene glycol, polypropylene glycol, polyacrylic acid, poly(methacrylic acid) and sodium polystyrene sulfonate, as well as copolymers comprising two or more of these.

The molecular weight of the polymer may be 200 to 3,000 and preferably 500 to 2,000, as the number-average molecular weight in terms of polyethylene glycol and measured by gel permeation chromatography. Using a polymer with a molecular weight in this range can increase the osmotic pressure of the draw solution flow while maintaining a sufficiently high flow property for the draw solution flow.

<Organic solvent/polymer ratio>

When the draw solution comprises both an organic solvent and a polymer, the content ratio of the polymer with respect to the total amount of the draw solution may be 10 mass% or higher, 20 mass% or higher, 30 mass% or higher or 40 mass% or higher, and 90 mass% or lower, 80 mass% or lower, 70 mass% or lower or 60 mass% or lower. With a ratio in this range, the osmotic pressure of the draw solution flow can be increased while maintaining a sufficiently high flow property for the draw solution flow.

<Salt>

If the draw solution comprises a salt, it will be possible to increase the osmotic pressure of the draw solution flow essentially without impairing the flow property of the draw solution flow.

The salt in the draw solution is preferably a salt that is soluble in the organic solvent or polymer present in the draw solution. Specifically, such salts include alkali metal or alkaline earth metal salts, among which halides of alkali metals or alkaline earth metals are preferred. Specific examples include lithium chloride and magnesium chloride.

When the draw solution contains a salt, the salt concentration in the draw solution may be high within a range such that the salt does not precipitate, in order to increase the osmotic pressure of the draw solution flow. The salt concentration in the draw solution may be 0.5 mol/L to 5.0 mol/L, for example, and is preferably 1.0 mol/L to 3.0 mol/L.

<Preferred mode for draw solution flow>

The draw solution for the feed solution flow concentration system of the invention is preferably composed entirely of a polymer, or composed of a polymer and an organic solvent, or composed of an organic solvent and a salt.

<Forward osmosis membrane>

The forward osmosis membrane used in the feed solution flow concentration system of the invention preferably has a water content of 300 $g/m^2$ or lower. As mentioned above, a lower water content of the forward osmosis membrane in the feed solution flow concentration system of the invention increases the flux of the organic solvent.

From this viewpoint, the water content of the forward osmosis membrane may be 250 $g/m^2$ or lower, 200 $g/m^2$ or lower, 150 $g/m^2$ or lower, 100 $g/m^2$ or lower, 50 $g/m^2$ or lower, 30 $g/m^2$ or lower, 20 $g/m^2$ or lower, 10 $g/m^2$ or lower or 5 $g/m^2$ or lower.

In the feed solution flow concentration system of the invention, the effect of the invention is especially effective when the water content of the forward osmosis membrane is 300 $g/m^2$ or lower, 250 $g/m^2$ or lower, 200 $g/m^2$ or lower, 150 $g/m^2$ or lower, 100 $g/m^2$ or lower, 50 $g/m^2$ or lower, 30 $g/m^2$ or lower, 20 $g/m^2$ or lower, 10 $g/m^2$ or lower or 5 $g/m^2$ or lower, and the value of the H term ($\delta_H$) of the Hansen solubility parameter of the organic solvent in the feed solution is 2.5 $MPa^{0.5}$ to 12.5 $MPa^{0.5}$

If the water content of the forward osmosis membrane is 300 $g/m^2$ or lower, as mentioned above, affinity between the forward osmosis membrane and organic solvent may increase, thus increasing the flux of the organic solvent. An organic solvent with a $\delta_H$ value of lower than 2.5 $MPa^{0.5}$, however, is less able to permeate through the forward osmosis membrane, tending to lower flux. An organic solvent with a $\delta_H$ value of higher than 12.5 MPa$^{0.5}$, on the other hand, has high hydrophilicity and can easily permeate even a forward osmosis membrane with a high water content, and therefore the effect of controlling the water content of the forward osmosis membrane is less advantageous.

According to the invention, it is possible to accomplish highly efficient concentration of a feed solution flow containing a solvent with a $\delta_H$ value of 2.5 MPa$^{0.5}$ to 12.5 MPa$^{0.5}$, with which is difficult to obtain high flux in common forward osmosis methods.

With the organic solvent of the feed solution used in the feed solution flow concentration system of the invention, the effect of the invention is maximally exhibited when the water content of the forward osmosis membrane is 300 g/m$^2$ or lower, 250 g/m$^2$ or lower, 200 g/m$^2$ or lower, 150 g/m$^2$ or lower, 100 g/m$^2$ or lower, 50 g/m$^2$ or lower, 30 g/m$^2$ or lower, 20 g/m$^2$ or lower, 10 g/m$^2$ or lower or 5 g/m$^2$ or lower, and the value of $\delta_H$ is 3.0 MPa$^{0.5}$ to 10.0 MPa$^{0.5}$

The water content of the forward osmosis membrane can be calculated by contacting the forward osmosis membrane with a hydrophilic organic solvent to extract the moisture in the forward osmosis membrane by the hydrophilic organic solvent, and then using the water content of the hydrophilic organic solvent before and after contact, as well as the membrane area of the forward osmosis membrane.

As explained below, the forward osmosis membrane in the feed solution flow concentration system of the invention is preferably used in the form of a forward osmosis membrane module housed in a housing. In this case, the water content of the forward osmosis membrane can be calculated by the following formula (2), by circulating the hydrophilic organic solvent through the feed solution flow side space and draw solution flow side space of the forward osmosis membrane module, and using the water content of the hydrophilic organic solvent before and after circulation, as well as the membrane area of the forward osmosis membrane.

[Mathematical Formula 2]

$$\text{Membrane water content} = \frac{Wf \times (Cwfl - Cwf0) + Wd \times (Cwdl - Cwd0)}{M} \quad (2)$$

{In formula (2),

Wf is the mass (g) before circulation of the hydrophilic organic solvent that has been circulated through the feed solution flow side space,
Cwfl is the water content after circulation of the hydrophilic organic solvent that has been circulated through the feed solution flow side space,
Cwf0 is the water content before circulation of the hydrophilic organic solvent that has been circulated through the feed solution flow side space,
Wd is the mass (g) before circulation of the hydrophilic organic solvent that has been circulated through the draw solution flow side space,
Cwdl is the water content after circulation of the hydrophilic organic solvent that has been circulated through the draw solution flow side space,
Cwd0 is the water content before circulation of the hydrophilic organic solvent that has been circulated through the draw solution flow side space,
M is the membrane area (m$^2$) of the forward osmosis membrane, and
the units for the calculated membrane water content are "g/m$^2$".}

The amount of hydrophilic organic solvent circulated through the feed solution flow side space may be 400 g/m$^2$ to 3,500 g/m$^2$, as the mass of the hydrophilic organic solvent per unit area of the forward osmosis membrane. When the forward osmosis membrane is in the form of hollow fibers, the inner spaces of the hollow fibers may be 400 g/m$^2$ to 600 g/m$^2$, and the outer spaces of the hollow fibers may be 2,000 g/m$^2$ to 3,500 g/m$^2$. The circulation speed is preferably 100 mm/sec or lower as the linear velocity, and may be 5 mm/sec to 50 mm/sec, for example.

The hydrophilic organic solvent used for measurement of the water content of the forward osmosis membrane is preferably a hydrophilic solvent that does not dissolve the forward osmosis membrane, and it may be appropriately selected from among tetrahydrofuran and ethanol, for example, depending on the material of the forward osmosis membrane.

The forward osmosis membrane of the invention may be a known filtration membrane, such as a microfiltration membrane, ultrafiltration membrane or nanofiltration membrane, or it may be a composite semipermeable membrane comprising a support layer and a separation active layer formed on the support layer.

When the forward osmosis membrane used is a filtration membrane such as a microfiltration membrane, ultrafiltration membrane or nanofiltration membrane, the material composing the filtration membrane may be a silicone-based polymer, for example.

When a nanofiltration membrane composed of a silicone-based polymer is used as the forward osmosis membrane, the molecular weight cutoff may be 100 or greater, 150 or greater, 200 or greater, 250 or greater or 300 or greater, and 1,000 or lower, 800 or lower, 600 or lower, 500 or lower or 400 or lower, for example.

When the forward osmosis membrane is a composite semipermeable membrane comprising a support layer and a separation active layer formed on the support layer, the separation active layer may be provided on one or both sides of the support layer. When the separation active layer is provided only on one side of the support layer, the side on which the separation active layer has been formed is preferably the feed solution flow side.

A support layer is a membrane for support of the separation active layer, and the layer itself preferably exhibits essentially no separation performance for the substance to be separated. The support layer used may also be one that comprises a publicly known microporous membrane or a nonwoven fabric support layer.

A preferred support layer according to the invention is a porous support layer. The porous support layer has pores with pore sizes of preferably 0.001 $\mu$m to 0.1 $\mu$m and more preferably 0.005 $\mu$m to 0.05 $\mu$m on the surface. The structure from one side surface of the porous support layer to the opposite side surface in the thickness direction of the membrane is preferably as sparse as possible, while maintaining strength, in order to reduce the permeation resistance for permeating organic solvent. The sparse structure at these sections preferably consists of reticular or finger-like voids, or combinations thereof.

The separation active layer of the forward osmosis membrane is preferably a thin-film layer composed mainly of at least one substance selected from among polysulfone, polyethersulfone, polyvinylidene fluoride, polyacrylonitrile, polyethylene, polypropylene, polyamide, polyimide and cellulose acetate, for example. More preferably, the layer is composed mainly of at least one polymer selected from among polyvinylidene fluoride, polyacrylonitrile, polyamide and polyimide, even more preferably it is a layer comprising a polyamide, and most preferably it is a layer comprising a polyamide. The polymer composing the separation active layer may be crosslinked or non-crosslinked. When the separation active layer is a crosslinked polymer, the degree of crosslinking may be as desired.

A separation active layer comprising a polyamide can be formed by interfacial polymerization of a polyfunctional acid halide and a polyfunctional amine on the support layer.

A polyfunctional acid halide is an acid halide compound having two or more acid halide groups in the molecule. Specific examples of polyfunctional acid halides include trimesic acid trichloride, isophthaloyl dichloride and terephthaloyl dichloride, any one or more of which may be suitably used.

A polyfunctional amine is an amino compound having two or more amino groups in the molecule. Specific examples of polyfunctional amines that may be suitably used include one or more selected from among m-phenylenediamine and p-phenylenediamine.

The interfacial polymerization between the polyfunctional acid halide and the polyfunctional amine can be carried out by an established method.

The forward osmosis membrane may have a structure such as a hollow fiber, tubular or flat membrane form, for example. A hollow fiber forward osmosis membrane is preferred as it allows formation of a flow channel for passage of the feed solution flow and draw solution flow, without using a spacer, allowing concentration of the feed solution flow to be carried out in a uniform manner.

The forward osmosis membrane is preferably used in the form of a forward osmosis membrane module housed in an appropriate housing.

A hollow fiber forward osmosis membrane module comprising a plurality of hollow fiber forward osmosis membranes housed in an appropriate housing is particularly preferred from the viewpoint of allowing the membrane area per unit volume to be increased.

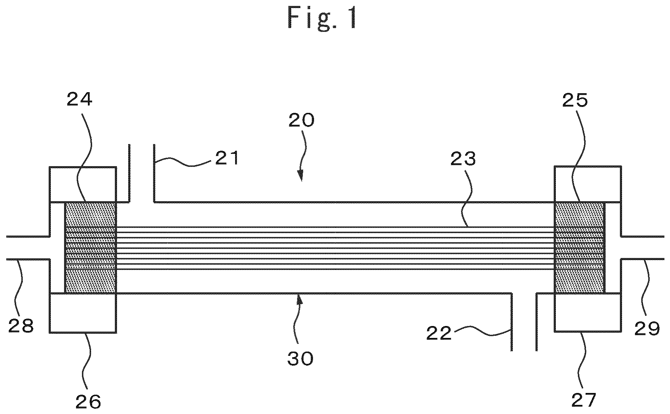

Fig. 1 is a simplified cross-sectional view showing an example of the structure of a hollow fiber forward osmosis membrane module that is preferred for use in the feed solution flow concentration system of the invention.

In the forward osmosis membrane module (20) shown in Fig. 1, a plurality of hollow fiber forward osmosis membranes (23) are housed in a housing (30). Both ends of the forward osmosis membrane (23) are adhesively anchored to the housing (30) by adhesive anchoring parts (24, 25).

Headers (26, 27) are disposed at both ends of the housing (30), each of the headers (26, 27) having a respective core side conduit (28, 29) communicating with the space inside the forward osmosis membrane (23). One of the core side conduits (28, 29) is the feed solution inlet, and the other is the concentrated feed solution outlet.

On the side wall of the housing (30) there are two shell side conduits (21, 22) communicating with the space on the outside of the forward osmosis membrane (23). One of the shell side conduits (21, 22) is the draw solution inlet, and the other is the diluted draw solution outlet.

The interior of the housing (30) is divided into two parts, a space through which the feed solution flows and a space through which the draw solution flows, by the membrane part and the adhesive anchoring parts (24, 25) of the forward osmosis membrane (23), both spaces being blocked from flow except for back and forth movement of organic solvent through the membrane part of the forward osmosis membrane (23).

When the feed solution is introduced from either of the core side conduits (28, 29) of the forward osmosis membrane module (20) (the feed solution inlet), the feed solution flow (flow of the feed solution) reaches the inner space of the hollow fiber forward osmosis membrane (23). Likewise, when the draw solution is introduced from either of the shell side conduits (21, 22) of the housing (30) (the draw solution inlet), the draw solution flow (flow of the draw solution) reaches the outer space of the hollow fiber forward osmosis membrane (23). During this time, the feed solution flow and draw solution flow contact through the membrane section of the forward osmosis membrane (23), causing organic solvent to migrate from the feed solution flow into the draw solution flow. This results in concentration of the feed solution flow.

The feed solution flow is concentrated while flowing through the inner space of the hollow fiber forward osmosis membrane (23), and flows out as the concentrated feed solution flow from the other of the core side conduits (28, 29) (concentrated feed solution outlet). Likewise, the draw solution flow is diluted while flowing through the outer space of the hollow fiber forward osmosis membrane (23), and flows out as the diluted draw solution flow from the other of the shell side conduits (21, 22) (diluted draw solution outlet).

It is by this mechanism that the feed solution flow is concentrated according to the invention.

When the forward osmosis membrane (23) has a support layer and a separation active layer formed on one side of the support layer, the separation active layer is preferably formed on the side in contact with the feed solution flow, as mentioned above. Therefore, in the forward osmosis membrane module (20) shown in Fig. 1 wherein the feed solution flow flows through the inner space of the hollow fiber forward osmosis membrane, the separation active layer is preferably provided on the inner side of the hollow fiber support layer.

As mentioned above, the forward osmosis membrane used in the feed solution flow concentration system of the invention preferably has a water content of 300 $g/m^2$ or lower.

It is therefore desirable to carry out a forward osmosis membrane water content-lowering step, in which the water content of the forward osmosis membrane is lowered before application of the forward osmosis membrane in the feed solution flow concentration system of the invention.

The forward osmosis membrane water content-lowering step may be, for example, a step of circulating dry air on the forward osmosis membrane surface, or a step of replacing the water in the forward osmosis membrane with an organic solvent.

The step of circulating dry air on the forward osmosis membrane surface may be carried out with a dry air circulation speed of 1 m/sec to 10 m/sec and preferably 2 m/sec to 8 m/sec as the linear velocity, and with a circulation time of 5 seconds to 480 minutes and preferably 10 seconds to 240 minutes, for example. The temperature of the dry air may be as desired, and for example, it may be 0°C to 200°C and preferably 10°C to 100°C, although room temperature is sufficient.

Dry air circulation may be carried out on one or both sides of the forward osmosis membrane, and preferably on both sides of the forward osmosis membrane.

The step of replacing the water in the forward osmosis membrane with an organic solvent may be carried out, for example, by immersing the forward osmosis membrane in an organic solvent. The organic solvent is preferably the same as the solvent in the feed solution, from the viewpoint of increasing the flux of the organic solvent during concentration. When the feed solution contains multiple different organic solvents, one of these organic solvents may be used alone, or two or more may be used, in the step of replacing the water in the forward osmosis membrane with the organic solvent.

The organic solvent used in this step may be dewatered by a publicly known method.

The immersion time may be 1 second to 1 hour, for example, and is preferably 3 seconds to 30 minutes and more preferably 5 seconds to 10 or 5 minutes. The temperature of the organic solvent may be from 0°C up to the boiling point, for example, and it is preferably 10°C to 50°C, although room temperature is sufficient.

The step of replacing the water in the forward osmosis membrane with an organic solvent may be carried out once, or it may be repeated two or more times. This step is preferably carried out 1 to 4 times.

When the forward osmosis membrane is in the form of a module, the step of replacing the water in the forward osmosis membrane with an organic solvent can be easily carried out by first filling the space in the housing of the module with the organic solvent, and then removing the organic solvent.


<Example of feed solution flow concentration system>

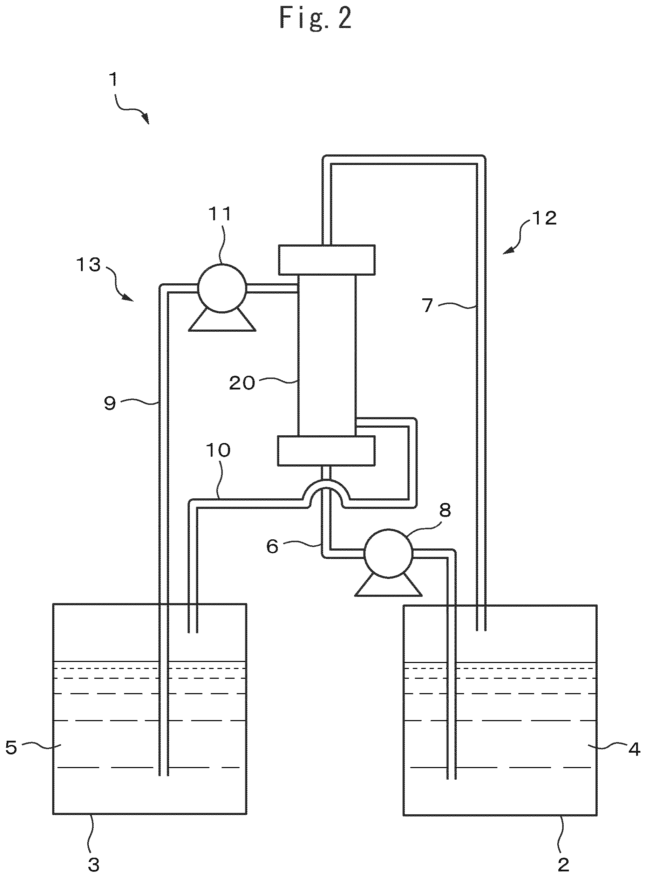

Fig. 2 is a conceptual drawing showing an example of the construction of a feed solution flow concentration system of the invention.

The feed solution flow concentration system (1) of Fig. 2 has a feed solution system (12) and a draw solution system (13), which are in contact through the forward osmosis membrane in the forward osmosis membrane module (20).

The feed solution system (12) comprises a feed solution tank (2), feed solution delivery conduits (6, 7) and a feed solution delivery pump (8). The feed solution tank (2) is filled with the feed solution (4), with the feed solution (4) being circulated in the feed solution system (12). That is, the feed solution (4) passes through the feed solution delivery conduit (6) by action of the feed solution delivery pump (8) and enters into the forward osmosis membrane module (20). The feed solution (4) is discharged after having passed through the inner space of the forward osmosis membrane, and returns to the feed solution tank (2) through the feed solution delivery conduit (7).

The draw solution system (13) comprises a draw solution tank (3), draw solution delivery conduits (9, 10) and a draw solution delivery pump (11). The draw solution tank (3) is filled with the draw solution (5), with the draw solution (5) being circulated in the draw solution system (13). That is, the draw solution (5) passes through the draw solution delivery conduit (9) by action of the draw solution delivery pump (11) and enters into the forward osmosis membrane module (20). The draw solution (5) is discharged after having passed through the outer space of the forward osmosis membrane, and returns to the draw solution tank (3) through the draw solution delivery conduit (10).

The feed solution (4) and draw solution (5) are in contact through the membrane section of the forward osmosis membrane in the forward osmosis membrane module (20), but they do not directly mix. When the feed solution (4) and the draw solution (5) have contacted across the membrane section of the forward osmosis membrane, the organic solvent in the feed solution (4) passes through the membrane section of the forward osmosis membrane and migrates to the draw solution (5), the feed solution (4) being concentrated to form a concentrated feed solution, and the draw solution (5) being diluted to form a diluted draw solution.

The direction of the flow of the feed solution (4) (feed solution flow) and of the flow of the draw solution (5) (draw solution flow) in the forward osmosis membrane module (20) may be cocurrent flows in the same direction through the membrane section of the forward osmosis membrane, or they may be countercurrent flows in opposite directions.

In the feed solution flow concentration system (1) of Fig. 2, as mentioned above, the feed solution (4) is concentrated while circulating in the feed solution flow system (12), and the draw solution (5) is diluted while circulating in the draw solution system (13).

When using the feed solution flow concentration system (1) of Fig. 2, the mechanism described above can be used to concentrate the feed solution (4) to the concentration rate.

The feed solution flow concentration system (1) of Fig. 2 is a production system known as a "batch system" in which the feed solution flow, either all at once or in divided portions, is concentrated in a non-continuous manner, and the concentrated feed solution flow is removed all at once after completion of the concentrating procedure.

The feed solution flow concentration system of the invention may also be a continuous production system.

In a feed solution flow concentration system employing a continuous production system, the feed solution flow is continuously supplied to the forward osmosis membrane module with the concentrated feed solution flow being continuously removed, during the period in which the system is operating.

<Feed solution flow concentration method>

Another aspect of the invention provides a feed solution flow concentration method.

The feed solution flow concentration method of the invention is a feed solution flow concentration method carried out using a feed solution flow concentration system of the invention, the method comprising a feed solution flow concentration step,

wherein a feed solution flow comprising an organic solvent as the solvent, and a draw solution flow, are caused to flow in countercurrent flow or cocurrent flow through a forward osmosis membrane,
the organic solvent in the feed solution flow is caused to pass through the forward osmosis membrane and migrate into the draw solution flow, thereby obtaining:
a concentrated feed solution flow as the feed solution flow that has been concentrated, and a diluted draw solution flow as the draw solution flow that has been diluted.

The feed solution flow concentration method of the invention may also include, before the feed solution flow concentration step, a forward osmosis membrane water content-lowering step in which the water content of the forward osmosis membrane is lowered. The forward osmosis membrane water content-lowering step may be, for example, a step of circulating dry air on the surface of the forward osmosis membrane, or a step of replacing the water in the forward osmosis membrane with an organic solvent.

The other details regarding the feed solution flow concentration method of the invention may be applied either directly or with appropriate modifications by a person skilled in the art, based on the above explanation regarding to the corresponding elements of the feed solution flow concentration system of the invention.

EXAMPLES

The invention will now be explained in detail through the following Examples, with the understanding that these Examples are not limitative on the invention.

<Experiment method>

(Fabrication of hollow fiber forward osmosis membrane module)

In each of Examples 1 to 20 and Comparative Examples 1 to 5, an experiment was conducted using a hollow fiber forward osmosis membrane module fabricated in the following manner.

Polyketone with a limiting viscosity of 2.2 dL/g, obtained by complete alternating copolymerization of ethylene and carbon monoxide, was added to a 65 mass% resorcin aqueous solution to a polymer concentration of 15 mass%, and the mixture was stirred and dissolved for 2 hours at 80°C and defoamed to obtain a uniform transparent spinning feed solution. The spinning feed solution was filled into a wet hollow fiber spinning machine equipped with a dual spinneret, and a hollow fiber membrane was formed by phase separation, extruding a 25 mass% methanol aqueous solution from the inside and the spinning feed solution from the outside of the dual spinneret, into a coagulation tank filled with a 40 mass% methanol aqueous solution.

The obtained hollow fiber membrane was cut to a length of 70 cm, bundled and washed. The washed hollow fiber membrane bundle was subjected to solvent exchange with acetone and then further solvent exchange with hexane, after which it was dried at 50°C. The outer diameter of the polyketone hollow fiber membrane obtained in this manner was 0.8 mm, the inner diameter was 0.5 mm, the void percentage was 78%, and the maximum pore size of the membrane walls was 130 nm. A hollow fiber membrane bundle comprising 80 polyketone hollow fiber membranes was housed in a cylindrical module housing (tubular case) with a diameter of 2 cm and a length of 10 cm, and both ends of the hollow fiber membrane bundle were anchored with an adhesive, after which both ends of the adhesively anchored part were cut to open both ends of the hollow fiber membrane, thereby fabricating a polyketone hollow fiber support layer module with a membrane effective length of 70 mm.

The obtained polyketone hollow fiber support layer module was used for interfacial polymerization on the inner surface of each hollow fiber support layer, as described below.

After placing 20.216 g of m-phenylenediamine and 1.52 g of sodium lauryl sulfate in a 1 L container, 991 g of purified water was added and dissolved, preparing a first solution to be used for interfacial polymerization. Next, 0.6 g of trimesic acid trichloride was placed in a separate 1 L container, and 300 g of n-hexane was added and dissolved to prepare a second solution to be used for interfacial polymerization.

The first solution was filled into the inner side of the hollow fiber support layer (core side) in the polyketone hollow fiber support layer module and allowed to stand for 5 minutes, after which the first solution was removed from the inner side of the hollow fiber support layer. With the inner side of the hollow fiber support layer wetted with the first solution, the core side pressure of the hollow fiber support layer was set to ordinary pressure, and the outside (shell side) pressure of the hollow fiber support layer was set to a reduced pressure of 10 kPa as the absolute pressure (core side pressure > shell side pressure). After standing for 2 minutes in this state, the pressure was maintained while feeding the second solution to the core side of the hollow fiber support layer for 3 minutes at a flow rate of 40 mL/min, for interfacial polymerization to form a separation active layer composed of a polyamide. The polymerization temperature was set to 25°C.

The interfacial polymerized polyketone hollow fiber support layer module was allowed to stand at 50°C for 5 minutes for gasification removal of the n-hexane, and then both the shell side and core side were washed with purified water to fabricate a forward osmosis membrane module with a membrane area of $0.009 \, m^2$, having the structure shown in Fig. 1.

(Fabrication of flat-membrane forward osmosis membrane module)

In Examples 21 to 23 and Comparative Examples 6 to 8, an evaluation cell by Sterlitech Corporation ("Explorer CF042SS-FO" (effective membrane area: 42 $cm^2$ (0.0042 $m^2$)) was used as the flat-membrane forward osmosis membrane module, with the following flat-membrane forward osmosis membrane installed in it.

The flat-membrane forward osmosis membrane used was "oNF-2" by BORSIG Membrane Technology GmbH. The membrane is a membrane comprising a silicone-based polymer, and it is a nanofiltration membrane with a thickness of approximately 0.21 mm and a molecular cutoff of 350.

(Measurement of membrane water content)

For a hollow fiber forward osmosis membrane module, 4.4 g of tetrahydrofuran (THF) was passed through the core side of the forward osmosis membrane module obtained as described above, at a linear velocity of 10 mm/sec. Also, 28.5 g of THF was passed through the shell side at a linear velocity of 10 mm/sec. Both THF components were mixed after passage through the forward osmosis membrane module, and the water content was measured.

For a flat-membrane forward osmosis membrane module, 14 g of tetrahydrofuran (THF) was passed through on one side of the forward osmosis membrane module obtained as described above, at a linear velocity of 10 mm/sec. Also, 14 g of THF was passed through on the opposite surface side at a linear velocity of 10 mm/sec. Both THF components were mixed after passage through the forward osmosis membrane module, and the water content was measured.

The water content per unit area of the forward osmosis membrane was calculated from the difference in THF water content before and after each passage through the forward osmosis membrane module, and the membrane area of the forward osmosis membrane module.

Measurement of the THF water content was accomplished using a Karl Fischer moisture measuring apparatus (Model CA-310, product of Nitto Seiko Analytics Co., Ltd.), with approximately 0.5 mL of THF taken into a 1 mL syringe and about 0.1 mL injected into the apparatus.

(Organic solvent removal)

For the following Examples and Comparative Examples, organic solvent removal from each feed solution flow was carried out by:

incorporating a hollow fiber forward osmosis membrane module as the forward osmosis membrane module (20) in the feed solution flow concentration system shown in Fig. 2, for Examples 1 to 20 and Comparative Examples 1 to 5; and incorporating the flat-membrane forward osmosis membrane module described above (evaluation cell: "Explorer CF042") instead of the forward osmosis membrane module (20) in the feed solution flow concentration system shown in Fig. 2, for Examples 21 to 23 and Comparative Examples 6 to 8.

Each forward osmosis membrane in the forward osmosis membrane module was pretreated as specified (water content lowering step) according to the Examples and Comparative Examples, and supplied for organic solvent removal after measuring the membrane water content by the method described above.

Each of the feed solutions and draw solutions listed in Table 1 were used in an amount of 150 g each. The feed solution flow and draw solution flow were each passed through and circulated under the conditions described below, both solutions being contacted through the forward osmosis membrane for organic solvent removal.

The flow conditions for the feed solution flow and draw solution flow were as follows.

(1) Hollow fiber forward osmosis membrane module

Feed solution flow: Flow to core side at a flow rate of 36 mL/min
Draw solution flow: Flow to shell side at a flow rate of 100 mL/min
Flow direction: cocurrent flow

(2) Flat-membrane forward osmosis membrane module

Feed solution flow: Flow to one side of forward osmosis membrane at a flow rate of 100 mL/min.
Draw solution flow: Flow to other side of forward osmosis membrane at a flow rate of 100 mL/min.
Flow direction: cocurrent flow (codirectional)

(Flux measurement)

The increase (kg) in the draw solution from 10 to 30 minutes after organic solvent removal had been carried out for 30 minutes was divided by the operating time (h) and the membrane area ($m^2$), to calculate the flux ($kg/(m^2 \cdot h)$) of the organic solvent.

(Water content of solvent)

The water contents of the organic solvents used in the Examples and Comparative Examples were as follows.

THF: 90 ppm
EtOAc: 170 ppm
MeCN: 30 ppm
EtOH: 110 ppm

<Comparative Example 1 and Examples 1 to 5>

For Comparative Example 1 and Examples 1 to 5, THF was used as the feed solution, and a solution comprising 50 parts by mass of PPG1000 (polypropylene glycol with a number-average molecular weight of approximately 1,000) and 50 parts by mass of THF was used as the draw solution.

The forward osmosis membranes in the hollow fiber forward osmosis membrane module were each provided for organic solvent removal after the pretreatment described below (water content-lowering step).

Comparative Example 1: Purified water was circulated through both the shell side and core side of the hollow fiber forward osmosis membrane module for 120 minutes at a flow rate of 36 mL/min, for washing.

Example 1: Dry air was circulated through for 15 seconds at a flow rate of 5 L/min, on both the shell side and core side of the hollow fiber forward osmosis membrane module.

Example 2: Dry air was circulated through for 120 minutes at a flow rate of 5 L/min, on both the shell side and core side of the hollow fiber forward osmosis membrane module.

Example 3: Purified water was circulated through both the shell side and core side of the hollow fiber forward osmosis membrane module for 120 minutes at a flow rate of 36 mL/min, for purified water washing. Next, a solvent exchange procedure was carried out once, in which the solvent (THF) was filled into both the shell side and core side of the forward osmosis membrane module and held for 10 seconds, after which the solvent was removed.

Example 4: After purified water washing in the same manner as Example 3, the same solvent exchange procedure as Example 3 was carried out twice.

Example 5: After purified water washing in the same manner as Example 3, the same solvent exchange procedure as Example 3 was carried out 3 times.

Table 1 shows the values for the H term ($\delta_H$) for the Hansen solubility parameters of the solvent (THF) in the feed solution, and Table 2 shows the water content of the forward osmosis membrane after pretreatment (water content-lowering step), and the flux.

<Comparative Example 2 and Examples 6 to 10>

For Comparative Example 2 and Examples 6 to 10, pretreatment (the water content-lowering step) and organic solvent removal for the hollow fiber forward osmosis membrane module were carried out in the same manner as for Comparative Example 1 and Examples 1 to 5, except that ethyl acetate (EtOAc) was used as the feed solution and a solution comprising 50 parts by mass of PPG1000 and 50 parts by mass of EtOAc was used as the draw solution.

Table 1 shows the $\delta_H$ values for the solvent (EtOAc) in the feed solution, and Table 2 shows the water content of the forward osmosis membrane after pretreatment (water content-lowering step), and the flux.

<Comparative Example 3 and Examples 11 to 15>

For Comparative Example 3 and Examples 11 to 15, pretreatment (the water content-lowering step) and organic solvent removal for the hollow fiber forward osmosis membrane module were carried out in the same manner as for Comparative Example 1 and Examples 1 to 5, except that acetonitrile (MeCN) was used as the feed solution and a solution comprising 50 parts by mass of PPG1000 and 50 parts by mass of MeCN was used as the draw solution.

Table 1 shows the $\delta_H$ values for the solvent (MeCN) in the feed solution, and Table 2 shows the water content of the forward osmosis membrane after pretreatment (water content-lowering step), and the flux.

<Comparative Example 4 and Example 16>

For Comparative Example 4 and Example 16, pretreatment (the water content-lowering step) and organic solvent removal for the hollow fiber forward osmosis membrane module were carried out in the same manner as Comparative Example 1 and Example 2, except that ethanol (EtOH) was used as the feed solution and an EtOH solution of lithium chloride (LiCl) at a concentration of 2 mol/L was used as the draw solution.

Table 3 shows the $\delta_H$ values for the solvent (EtOH) in the feed solution, and Table 4 shows the water content of the forward osmosis membrane after pretreatment (water content-lowering step), and the flux.

<Example 17>

Example 17 is an example using only a polymer soluble in the organic solvent in the feed solution, as the draw solution.

In Example 17, pretreatment (the water content-lowering step) and organic solvent removal for the hollow fiber forward osmosis membrane module were carried out in the same manner as Example 2, except that a solution comprising 95 parts by mass of THF and 5 parts by mass of water ($H_2O$) was used as the feed solution, and PPG1000 was used as the draw solution.

Table 3 shows the $\delta_H$ values for the solvent (THF) in the feed solution, and Table 4 shows the water content of the forward osmosis membrane after pretreatment (water content-lowering step), and the flux.

<Comparative Example 5 and Examples 18 to 20>

For Comparative Example 5 and Examples 18 to 20, the feed solution contained β-D-Glucose Pentaacetate (CAS No. 604-69-3) (GpA) as a solute.

For Comparative Example 5 and Example 18, pretreatment (the water content-lowering step) and organic solvent removal for the hollow fiber forward osmosis membrane module were carried out in the same manner as Comparative Example 1 and Example 2, except that a solution comprising 1 part by mass of GpA, 95 parts by mass of EtOAc and 4 parts by mass of $H_2O$ was used as the feed solution, and a solution comprising 50 parts by mass of PPG400 (polypropylene glycol with a number-average molecular weight of approximately 400) and 50 parts by mass of EtOAc was used as the draw solution.

For Examples 19 and 20, pretreatment (the water content-lowering step) and organic solvent removal for the hollow fiber forward osmosis membrane module were carried out in the same manner as Examples 1 and 2, except that a solution comprising 1 part by mass of GpA, 94 parts by mass of THF and 5 parts by mass of $H_2O$ was used as the feed solution, and a solution comprising 50 parts by mass of PPG400 and 50 parts by mass of THF was used as the draw solution.

Table 3 shows the $\delta_H$ values for the solvent (EtOAc or THF) in the feed solution, and Table 4 shows the water content of the forward osmosis membrane after pretreatment (the water content-lowering step), and the flux.

<Comparative Examples 6 to 8 and Examples 21 to 23>

For Comparative Examples 6 to 8 and Examples 21 to 23, a flat-membrane forward osmosis membrane module with a membrane area of 0.0042 m² was used, and the feed solutions and draw solutions listed in Table 3 were used, for pretreatment (the water content-lowering step) and organic solvent removal for the flat-membrane forward osmosis membrane module.

Table 3 shows the $\delta_H$ values for the solvent (THF, toluene or EtOAc) in the feed solution, and Table 4 shows the water content of the forward osmosis membrane after pretreatment (the water content-lowering step), and the flux.

[Table 1]

Table 1

|  | Feed solution composition (mass ratio) | δH of organic solvent in feed solution ((MPa)$^{0.5}$) | Draw solution composition (mass ratio) |
|---|---|---|---|
| Comp. Example 1 | THF = 100 | 5.79 | PPG1000/THF = 50/50 |
| Example 1 | THF = 100 | 5.79 | PPG1000/THF = 50/50 |
| Example 2 | THF = 100 | 5.79 | PPG1000/THF = 50/50 |
| Example 3 | THF = 100 | 5.79 | PPG1000/THF = 50/50 |
| Example 4 | THF = 100 | 5.79 | PPG1000/THF = 50/50 |
| Example 5 | THF = 100 | 5.79 | PPG1000/THF = 50/50 |
| Comp. Example 2 | EtOAc = 100 | 7.50 | PPG1000/EtOAc = 50/50 |
| Example 6 | EtOAc = 100 | 7.50 | PPG1000/EtOAc = 50/50 |
| Example 7 | EtOAc = 100 | 7.50 | PPG1000/EtOAc = 50/50 |
| Example 8 | EtOAc = 100 | 7.50 | PPG1000/EtOAc = 50/50 |
| Example 9 | EtOAc = 100 | 7.50 | PPG1000/EtOAc = 50/50 |
| Example 10 | EtOAc = 100 | 7.50 | PPG1000/EtOAc = 50/50 |
| Comp. Example 3 | MeCN = 100 | 8.32 | PPG1000/MeCN = 50/50 |
| Example 11 | MeCN = 100 | 8.32 | PPG1000/MeCN = 50/50 |
| Example 12 | MeCN = 100 | 8.32 | PPG1000/MeCN = 50/50 |
| Example 13 | MeCN = 100 | 8.32 | PPG1000/MeCN = 50/50 |
| Example 14 | MeCN = 100 | 8.32 | PPG1000/MeCN = 50/50 |

(continued)

| | Feed solution composition (mass ratio) | δH of organic solvent in feed solution ((MPa)$^{0.5}$) | Draw solution composition (mass ratio) |
|---|---|---|---|
| Example 15 | MeCN = 100 | 8.32 | PPG1000/MeCN = 50/50 |

[Table 2]

Table 2

| | Forward osmosis membrane | | Forward osmosis membrane | | Organic solvent flux (kg/(m$^2$·h)) |
|---|---|---|---|---|---|
| | Form | Material | Pretreatment (water content-lowering step) | Membrane water content (g/m$^2$) | |
| Comp. Example 1 | Hollow fiber | PA/PK | Purified water washing | 392 | 2.9 |
| Example 1 | Hollow fiber | PA/PK | Dry air circulation, 15 sec | 292 | 3.7 |
| Example 2 | Hollow fiber | PA/PK | Dry air circulation, 2 h | 2 | 4.4 |
| Example 3 | Hollow fiber | PA/PK | Purified water washing → solvent (THF) exchange, once | 149 | 4.4 |
| Example 4 | Hollow fiber | PA/PK | Purified water washing → solvent (THF) exchange, two times | 43 | 4.9 |
| Example 5 | Hollow fiber | PA/PK | Purified water washing → solvent (THF) exchange, three times | 20 | 5.1 |
| Comp. Example 2 | Hollow fiber | PA/PK | Purified water washing | 515 | 1.2 |
| Example 6 | Hollow fiber | PA/PK | Dry air circulation, 15 sec | 292 | 1.4 |
| Example 7 | Hollow fiber | PA/PK | Dry air circulation, 2 h | 2 | 1.6 |
| Example 8 | Hollow fiber | PA/PK | Purified water washing → solvent (EtOAc) exchange, once | 99 | 1.7 |
| Example 9 | Hollow fiber | PA/PK | Purified water washing → solvent (EtOAc) exchange, 2 times | 58 | 2.4 |
| Example 10 | Hollow fiber | PA/PK | Purified water washing → solvent (EtOAc) exchange, 3 times | 20 | 3.1 |
| Comp. Example 3 | Hollow fiber | PA/PK | Purified water washing | 409 | 4.4 |
| Example 11 | Hollow fiber | PA/PK | Dry air circulation, 15 sec | 293 | 4.9 |
| Example 12 | Hollow fiber | PA/PK | Dry air circulation, 2 h | 2 | 4.7 |
| Example 13 | Hollow fiber | PA/PK | Purified water washing → solvent (MeCN) exchange, once | 77 | 5.4 |
| Example 14 | Hollow fiber | PA/PK | Purified water washing → solvent (MeCN) exchange, 2 times | 51 | 5.2 |

(continued)

| | Forward osmosis membrane | | Forward osmosis membrane | | Organic solvent flux (kg/(m²·h)) |
| | Form | Material | Pretreatment (water content-lowering step) | Membrane water content (g/m²) | |
|---|---|---|---|---|---|
| Example 15 | Hollow fiber | PA/PK | Purified water washing → solvent (MeCN) exchange, 3 times | 20 | 4.9 |

[Table 3]

Table 3

| | Feed solution composition (mass ratio) | δH of organic solvent in feed solution ((MPa)^0.5) | Draw solution composition (mass ratio) |
|---|---|---|---|
| Comp. Example 4 | EtOH = 100 | 17.19 | 2 mol/L LiCl in EtOH |
| Example 16 | EtOH = 100 | 17.19 | 2 mol/L LiCl in EtOH |
| Example 17 | THF/H2O = 95/5 | 5.79 | PPG1000 = 100 |
| Comp. Example 5 | GpA/EtOAc/H2O = 1/95/4 | 7.50 | PPG400/EtOAc = 50/50 |
| Example 18 | GpA/EtOAc/H2O = 1/95/4 | 7.50 | PPG400/EtOAc = 50/50 |
| Example 19 | GpA/THF/H2O = 1/94/5 | 5.79 | PPG400/THF = 50/50 |
| Example 20 | GpA/THF/H2O = 1/94/5 | 5.79 | PPG400/THF = 50/50 |
| Comp. Example 6 | THF = 100 | 5.79 | PPG1000/THF = 50/50 |
| Example 21 | THF = 100 | 5.79 | PPG1000/THF = 50/50 |
| Comp. Example 7 | Toluene = 100 | 3.30 | PPG1000/Toluene = 50/50 |
| Example 22 | Toluene = 100 | 3.30 | PPG1000/Toluene = 50/50 |
| Comp. Example 8 | EtOAc = 100 | 7.50 | PPG1000/EtOAc = 50/50 |
| Example 23 | EtOAc = 100 | 7.50 | PPG1000/EtOAc = 50/50 |

[Table 4]

Table 4

| | Forward osmosis membrane | | Forward osmosis membrane | | Organic solvent flux (kg/(m²·h)) |
| | Form | Material | Pretreatment (water content-lowering step) | Membrane water content (g/m²) | |
|---|---|---|---|---|---|
| Comp. Example 4 | Hollow fiber | PA/PK | Purified water washing | 478 | 4.7 |
| Example 16 | Hollow fiber | PA/PK | Dry air circulation, 2 h | 2 | 6.4 |
| Example 17 | Hollow fiber | PA/PK | Dry air circulation, 2 h | 2 | 14.0 |
| Comp. Example 5 | Hollow fiber | PA/PK | Purified water washing | 478 | 2.3 |
| Example 18 | Hollow fiber | PA/PK | Dry air circulation, 2 h | 2 | 3.3 |
| Example 19 | Hollow fiber | PA/PK | Dry air circulation, 15 sec | 292 | 10.4 |
| Example 20 | Hollow fiber | PA/PK | Dry air circulation, 2 h | 2 | 11.7 |
| Comp. Example 6 | Flat-membrane | Silicone | Purified water washing | 860 | 3.9 |

(continued)

|  | Forward osmosis membrane | | Forward osmosis membrane | | Organic solvent flux (kg/(m$^2$·h)) |
|  | Form | Material | Pretreatment (water content-lowering step) | Membrane water content (g/m$^2$) | |
| --- | --- | --- | --- | --- | --- |
| Example 21 | Flat-membrane | Silicone | Dry air circulation, 2 h | 19 | 4.4 |
| Comp. Example 7 | Flat-membrane | Silicone | Purified water washing | 860 | 0.8 |
| Example 22 | Flat-membrane | Silicone | Dry air circulation, 2 h | 19 | 1.9 |
| Comp. Example 8 | Flat-membrane | Silicone | Purified water washing | 860 | 0.8 |
| Example 23 | Flat-membrane | Silicone | Dry air circulation, 2 h | 19 | 3.1 |

The abbreviations of the components in the feed solutions and draw solutions in Table 1 and Table 3 have the following meanings.

GpA: β-D-Glucose Pentaacetate (CAS No. 604-69-3)

PPG1000: Polypropylene glycol with number-average molecular weight of ~1,000

PPG400: Polypropylene glycol with number-average molecular weight of ~400

THF: Tetrahydrofuran

EtOAc: Ethyl acetate

MeCN: Acetonitrile

EtOH: Ethanol

In Table 2 and Table 4, "PA/PK" in the "Material" column for the forward osmosis membrane represents a composite semipermeable membrane having a polyamide separation active layer on a polyketone support layer.

REFERENCE SIGNS LIST

1 Feed solution flow concentration system
2 Feed solution tank
3 Draw solution tank
4 Feed solution
5 Draw solution
6, 7 Feed solution delivery conduit
8 Feed solution delivery pump
9, 10 Draw solution delivery conduit
11 Draw solution delivery pump
12 Feed solution system
13 Draw solution system
20 Forward osmosis membrane module
21, 22 Shell side conduit
23 Forward osmosis membrane
24, 25 Adhesive anchoring part
26, 27 Header
28, 29 Core side conduit
30 Housing

**Claims**

1.  A feed solution flow concentration system wherein:

    a feed solution flow comprising an organic solvent as a solvent, and a draw solution flow, are caused to flow in countercurrent flow or cocurrent flow through a forward osmosis membrane, and
    the organic solvent in the feed solution flow is caused to pass through the forward osmosis membrane and migrate into the draw solution flow, thereby obtaining:

    a concentrated feed solution flow as the feed solution flow that has been concentrated, and a diluted draw solution flow as the draw solution flow that has been diluted,
    wherein the water content of the forward osmosis membrane is 300 g/m$^2$ or lower.

2.  The feed solution flow concentration system according to claim 1, wherein the H term of the Hansen solubility parameters ($\delta_H$) for the organic solvent in the feed solution flow is 2.5 MPa$^{0.5}$ to 12.5 MPa$^{0.5}$

3.  The feed solution flow concentration system according to claim 2, wherein the H term of the Hansen solubility parameters ($\delta_H$) for the organic solvent in the feed solution flow is 3.0 MPa$^{0.5}$ to 10.0 MPa$^{0.5}$

4.  The feed solution flow concentration system according to claim 3, wherein the organic solvent includes one or more selected from the group consisting of tetrahydrofuran, 2-methyltetrahydrofuran, diethyl ether, cyclopentyl methyl ether, t-butyl methyl ether, methyl acetate, ethyl acetate, propyl acetate, isopropyl acetate, butyl acetate, isobutyl acetate, toluene, acetone, acetonitrile, N,N-dimethylformamide, N,N-dimethylacetamide, N-methyl-2-pyrrolidone, dimethyl sulfoxide and 1,3-dimethyl-2-imidazolidinone.

5.  The feed solution flow concentration system according to any one of claims 1 to 4, wherein 50 mass% or more of the total solvent in the feed solution flow is an organic solvent.

6.  The feed solution flow concentration system according to any one of claims 1 to 4, wherein the feed solution flow comprises a solute.

7.  The feed solution flow concentration system according to any one of claims 1 to 4, wherein the draw solution flow comprises an organic solvent.

8.  The feed solution flow concentration system according to any one of claims 1 to 4, wherein the draw solution flow comprises a polymer.

9.  The feed solution flow concentration system according to claim 8, wherein the polymer is one or more selected from the group consisting of polyethylene glycol and polypropylene glycol.

10. The feed solution flow concentration system according to any one of claims 1 to 4, wherein:

    the forward osmosis membrane is a composite semipermeable membrane comprising a support layer and a separation active layer formed on the support layer, and
    the separation active layer comprises a polyamide.

11. The feed solution flow concentration system according to any one of claims 1 to 4, wherein the forward osmosis membrane is in the form of hollow fibers.

12. A feed solution flow concentration method carried out using a feed solution flow concentration system according to any one of claims 1 to 4, the method comprising a feed solution flow concentration step,

    wherein a feed solution flow comprising an organic solvent as the solvent, and a draw solution flow, are caused to flow in countercurrent flow or cocurrent flow through a forward osmosis membrane, and
    the organic solvent in the feed solution flow is caused to pass through the forward osmosis membrane and migrate into the draw solution flow, thereby obtaining:
    a concentrated feed solution flow as the feed solution flow that has been concentrated, and a diluted draw solution flow as the draw solution flow that has been diluted.

**13.** The feed solution flow concentration method according to claim 12, which comprises, before the feed solution flow concentration step, a forward osmosis membrane water content-lowering step, in which the water content of the forward osmosis membrane is lowered.

**14.** The feed solution flow concentration method according to claim 13, wherein the forward osmosis membrane water content-lowering step is a step in which the water in the forward osmosis membrane is replaced with the organic solvent in the feed solution flow.

Fig. 1

# Fig. 2

EP 4 691 609 A1

# INTERNATIONAL SEARCH REPORT

| International application No. |
|---|
| **PCT/JP2024/011963** |

### A. CLASSIFICATION OF SUBJECT MATTER

***B01D 61/00***(2006.01)i; ***B01D 69/08***(2006.01)i; ***B01D 69/12***(2006.01)i; ***B01D 71/56***(2006.01)i
FI: B01D61/00 500; B01D69/08; B01D69/12; B01D71/56

According to International Patent Classification (IPC) or to both national classification and IPC

### B. FIELDS SEARCHED

Minimum documentation searched (classification system followed by classification symbols)

B01D61/00-71/82, B01D53/22, C02F1/44

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| Y | CUI, Yue et al. Solvent Recovery via Organic Solvent Pressure Assisted Osmosis. Industrial & Engineering Chemistry Research, vol. 58, no. 12, pp. 4970-4978<br>    particularly, abstract column, p. 4971, left column, lines 11-14, p. 4971, right column, lines 11-26, fig. 1 | 1-14 |
| Y | JP 53-144471 A (ASAHI CHEMICAL INDUSTRY CO., LTD.) 15 December 1978 (1978-12-15)<br>    p. 2, lower left column, lines 2-11 | 1-14 |
| Y | JP 60-99309 A (EXXON RES. & ENG. CO.) 03 June 1985 (1985-06-03)<br>    example 4 | 1-14 |
| Y | JP 2-231435 A (HOECHST AG) 13 September 1990 (1990-09-13)<br>    p. 4, upper right column, lines 7-18 | 1-14 |

☐ Further documents are listed in the continuation of Box C.    ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

25

**INTERNATIONAL SEARCH REPORT**
Information on patent family members

International application No.

**PCT/JP2024/011963**

| Patent document cited in search report | | | Publication date (day/month/year) | Patent family member(s) | | | Publication date (day/month/year) |
|---|---|---|---|---|---|---|---|
| JP | 53-144471 | A | 15 December 1978 | (Family: none) | | | |
| JP | 60-99309 | A | 03 June 1985 | EP example 4 | 0137698 | A2 | |
| | | | | CA | 1254007 | A | |
| JP | 2-231435 | A | 13 September 1990 | US column 3, lines 48-59 | 5174899 | A | |
| | | | | AT | E141923 | T1 | |
| | | | | AU | 4685889 | A | |
| | | | | BR | 8906575 | A | |
| | | | | CA | 2006021 | A1 | |
| | | | | DE | 3842819 | A1 | |
| | | | | EP | 374615 | A2 | |
| | | | | ES | 2092471 | T3 | |
| | | | | HU | 52709 | A | |
| | | | | KR | 10-1990-0009674 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8027077 A
- JP 11075759 A
- JP 2019504763 A
- WO 2022004738 A

**Non-patent literature cited in the description**

- *CHEMICAL ABSTRACTS*, 604-69-3